# EUROPÄISCHE PATENTSCHRIFT

(11) **EP 1 840 005 B1**
(45) Veröffentlichungstag und Bekanntmachung des Hinweises auf die Patenterteilung: **16.09.2009**
(21) Anmeldenummer: 06025285.5
(22) Anmeldetag: 07.12.2006
(51) Int. Cl.: B62D 25/20, B60N 2/005

(54) **Fahrzeugkarosserie mit Querträgerstruktur für einen Sitzbereich des Fahrzeugs**
Vehicle body with cross member structure for a seat area in the vehicle
Carosserie d'un véhicule automobile avec une structure de traverse pour une zone d'assise du véhicule

(30) Priorität: 31.03.2006 DE 102006014981
(43) Veröffentlichungstag der Anmeldung: 03.10.2007
(73) Patentinhaber: Dr. Ing. h.c. F. Porsche Aktiengesellschaft, 70435 Stuttgart (DE)
(72) Erfinder: Schiebel, Dieter, 70825 Korntal-Münchigen (DE); Lippold, Andrea, 70499 Stuttgart (DE); Neumann, Wolfgang, 71735 Eberdingen (DE)

(56) Entgegenhaltungen:
- JP-A- 5 058 347
- JP-A- 6 211 167
- JP-A- 8 175 425
- JP-A- 2000 168 627
- JP-A- 2003 002 248
- US-B1- 6 168 228

## Beschreibung

Die vorliegende Erfindung bezieht sich auf eine Fahrzeugkarosserie mit seitlichen Schwellerabschnitten, Karosserieseitenteilen und einer Querträgerstruktur für einen Sitzbereich eines Fahrzeugs gemäß dem Oberbegriff des Patentanspruchs 1.

Aus der JP 05 058347 A ist eine solche Fahrzeugkarosserie bekannt. Deren Querträgerstruktur für einen Sitzbereich umfasst einen mittleren Sitzquerträger und jeweils seitlich davon einen seitlichen Sitzquerträger. Die Sitzquerträger sind miteinander verbunden. Die äußeren Enden der seitlichen Sitzquerträger reichen jeweils bis zu einem Schwellerabschnitt, wobei die seitlichen Sitzquerträger jeweils als U-Profil ausgeführt sind. Der mittlere Sitzquerträger ist als hutförmiger Querträger mit einem U-Profil ausgebildet. Durch seine Öffnung nach unten bildet der mittlere Sitzquerträger mit dem Fahrzeugboden ein Kastenprofil aus.

Obwohl auf beliebige Fahrzeuge und Sitzbereiche anwendbar, werden die vorliegende Erfindung sowie die ihr zugrunde liegende Problematik in Bezug auf einen Bereich der hinteren Sitzreihe eines Personenkraftfahrzeugs näher erläutert.

Querträgerstrukturen sind im modernen Fahrzeugbau hinlänglich bekannt und umfassen im Wesentlichen Anordnungen von Längsträgern und Querträgern, die einerseits die erforderliche Steifigkeit und Festigkeit der Fahrzeugkarosserie sicherstellen und andererseits bei einem Fahrzeugaufprall durch Deformationen der einzelnen Träger Aufprallenergien aufnehmen. Üblicherweise werden in den Frontbereichen als auch in den Heckbereichen spezielle Querträger vorgesehen, welche lediglich die Funktion einer vorbestimmten Karosseriesteifigkeit und Seitenkollisionssicherheit besitzen.

Bei der Erhöhung der Seitenkollisionssicherheit ist eine große Schwierigkeit im Gegensatz zu Frontalkollisionen darin zu sehen, dass eine vergleichbar geringe Materialmenge zwischen dem auftreffenden Gegenstand und dem Fahrzeuginsassen vorhanden und der dazwischenliegende verfügbare Deformationsweg kurz ist. Statistiken von Straßenverkehrsunfällen zeigen, dass die Verletzungen von Insassen im Falle von Seitenkollisionen sowohl hinsichtlich ihrer Häufigkeit als auch der Schwere sogar bei relativ geringen Geschwindigkeiten zunehmen.

Es wurden bereits verschiedene Lösungen zur Verbesserung des Seitenkollisionsschutzes von Fahrgastzellen vorgeschlagen. Die meisten konzentrieren sich dabei auf die Verstärkung der Türen durch Einbau von Verstärkungselementen zwischen der äußeren und der inneren Seitenwand der Tür in Form von Rohrkonstruktionen, profilierten Platten oder ähnlichem. Dadurch soll eine starre Konstruktion erzielt werden, die unter einer bestimmten Belastung lediglich einer gewissen maximalen Verformung unterliegt. In bestimmten Fällen sind die Türen in ihrem untersten Teil auch mit Verstärkungselementen versehen worden, um die Bodenschiene der Fahrgastzelle als Stützelement einzusetzen.

An diesen Ansätzen hat sich jedoch die Tatsache als nachteilig herausgestellt, dass zusätzliche Verstärkungsbauteile vorgesehen werden müssen, welche in einem zusätzlichen Herstellungsaufwand, zusätzlichen Herstellungskosten sowie in einer Gewichtserhöhung resultieren und schwer in die bestehende Struktur integrierbar sind.

Den bekannten Türverstärkungskonstruktionen ist ferner nachteilig gemeinsam, dass bei Seitenkollisionen eine nur geringe Masse des gesamten Fahrzeuges, das durch ein anderes Fahrzeug berührt wird, zur Verfügung steht, um im Anfangsstadium die Aufprallenergie aufzunehmen. Der geringe Verformungswiderstand der Tür oder des Seitenteils des Fahrzeugs, das kollidiert wurde, bewirkt zunächst nur eine geringe Geschwindigkeitsreduzierung des auffahrenden Fahrzeugs. Der Insasse wird daher durch die eine hohe Geschwindigkeit aufweisende Türseite berührt und einer kräftigen Beschleunigung relativ zum eigenen Fahrzeug während der weiteren Deformation unterworfen.

Aus der Druckschrift DE 42 05 891 C2 ist eine Sitzträgerkonstruktion bekannt, welche Sitzlängsträger und Sitzquerträger umfasst. Die Sitzquerträger sind über einen Tunnelquerträger miteinander verbunden und bilden einen in Fahrzeugquerrichtung wirkenden Verbund. Die Sitzquerträger weisen in den Endbereichen Sitzlängsträger auf, welche von den zugeordneten Türschwellern beabstandet sind.

Eine derartige Sitzträgerkonstruktion ist allerdings vornehmlich dazu geeignet, die Krafteinleitung in die Längsträger zu verbessern.

Somit liegt der vorliegenden Erfindung die Aufgabe zugrunde, eine Querträgerstruktur für einen Sitzbereich eines Fahrzeugs zu schaffen, welche die obengenannten Nachteile beseitigt und insbesondere gegenüber der bekannten Fahrzeugkarosserie einen wirksameren Schutz bei Seitenkollisionen bietet.

### VORTEILE DER ERFINDUNG

Diese Aufgabe wird erfindungsgemäß durch die Fahrzeugkarosserie mit den Merkmalen gemäß Patentanspruch 1 gelöst.

Die der vorliegenden Erfindung zugrunde liegende Idee besteht darin, dass die Querträgerstruktur für einen Sitzbereich des Fahrzeugs einen mittleren Sitzquerträger, welcher seitliche Befestigungsabschnitte umfasst, und zwei seitliche Sitzquerträger aufweist, wobei die beiden seitlichen Sitzquerträger jeweils mit einem zugeordneten seitlichen Befestigungsabschnitt des mittleren Sitzquerträgers verbunden sind und sich jeweils in Fahrzeugquerrichtung von dem zugeordneten seitlichen Befestigungsabschnitt des mittleren Sitzquerträgers bis in Wirkverbindung mit einem jeweils zugeordneten Seitenschwellerabschnitt des Fahrzeugs erstrecken. Dadurch wird eine von einem Seitenschweller zu dem gegenüberliegenden Seitenschweller durchgehende Querträgerstruktur geschaffen. Zusätzlich weist der mittlere Sitzquerträger in seinen beiden Seitenbereichen jeweils einen zusätzlichen Aufnahmeabschnitt für eine Aufnahme eines jeweils zugeordneten und darin eingesetzten Querverstärkungselementes auf. Die Querverstärkungselemente sind jeweils mit Koppelelementen für eine Anbindung der Querverstärkungselemente an einen jeweils zugeordneten Abschnitt der Karosserieseitenteile des Fahrzeugs gekoppelt. Dadurch wird erfindungsgemäß ein zusätzlicher, unabhängiger Lastpfad geschaffen, welcher bei einer Seitenkollision Aufprallenergie von dem kollidierten Karosserieseitenteil aufnimmt und über die Querverstärkungselemente und den mittleren Sitzquerträger auf den gegenüberliegend angeordneten Seitenschwellerabschnitt sowie das gegenüberliegende Karosserieseitenteil überträgt. Es wird die Gesamtsteifigkeit sowie die Seitencrashsicherheit vorteilhaft erhöht.

Die vorliegende Erfindung weist gegenüber den oben genannten Ansätzen den Vorteil auf, dass eine in Fahrzeugquerrichtung sehr steife Querträgerstruktur gebildet wird, welche einerseits die Torsionssteifigkeit verbessert und andererseits zusätzlich bei einem Seitenaufprall die entstehende Deformationsenergie aufnimmt und die notwendigen Reaktionskräfte aufzubauen imstande ist. Zusätzlich zu dieser Funktion dient die Trägerstruktur einer Aufnahme einer zugeordneten Sitzmulde, so dass die Trägerstruktur vorteilhaft eine Doppelfunktion besitzt.

Ferner ist die erfindungsgemäße Querträgerstruktur auf Höhe der Stoßstangen des kollidierenden Fahrzeuges vorgesehen, so dass die Stoßstange des kollidierenden Fahrzeugs an einem Eindringen in das Fahrzeug durch die Querträgerstruktur aufgrund der Aufnahme der Aufprallenergien gehindert wird.

Des Weiteren werden aufgrund der mehrteiligen Ausgestaltung der Struktur der Einbau erleichtert sowie die Herstellungskosten und die Herstellungsverfahren der einzelnen Teile optimiert, da für jedes Trägerteil einzeln ein geeignetes Herstellungsverfahren ausgewählt werden kann. Eine Verbindung der separat hergestellten Trägerteile erfolgt vorteilhaft erst nach deren Herstellung.

In den Unteransprüchen finden sich vorteilhafte Ausgestaltungen und Verbesserungen der im Patentanspruch 1 angegebenen Querträgerstruktur.

Gemäß einer bevorzugten Weiterbildung weist der mittlere Sitzquerträger mehrere Verstärkungsrippen auf, welche vorzugsweise in Längs- und Querrichtung innerhalb des Profils verlaufen. Dadurch kann die Steifigkeit des mittleren Sitzquerträgers und somit der gesamten Querträgerstruktur verbessert und die Seitenkollisionssicherheit zusätzlich erhöht werden.

Gemäß einer weiteren bevorzugten Weiterbildung ist der mittlere Sitzquerträger mit den beiden seitlichen Sitzquerträgern mittels einer Klebeverbindung und/oder einer Stanznietverbindung verbunden. Dies stellt zuverlässige und auf einfache Weise bewerkstelligbare Verbindungsmethoden dar.

### ZEICHNUNGEN

Die Erfindung wird im Folgenden anhand von Ausführungsbeispielen unter Bezugnahme auf die beiliegenden Figuren der Zeichnung näher erläutert.

Von den Figuren zeigen:
- Figur 1: eine perspektivische Ansicht einer Fahrzeugkarosserie mit einer Querträgerstruktur gemäß einem bevorzugten Ausführungsbeispiel der vorliegenden Erfindung;
- Figur 2: eine perspektivische Ansicht eines mittleren Sitzquerträgers gemäß einem bevorzugten Ausführungsbeispiel der vorliegenden Erfindung;
- Figur 3: eine perspektivische Ansicht eines Schließteils gemäß einem bevorzugten Ausführungsbeispiel der vorliegenden Erfindung;
- Figur 4: eine perspektivische Ansicht eines seitlichen Sitzquerträgers gemäß, einem bevorzugten Ausführungsbeispiel der vorliegenden Erfindung;

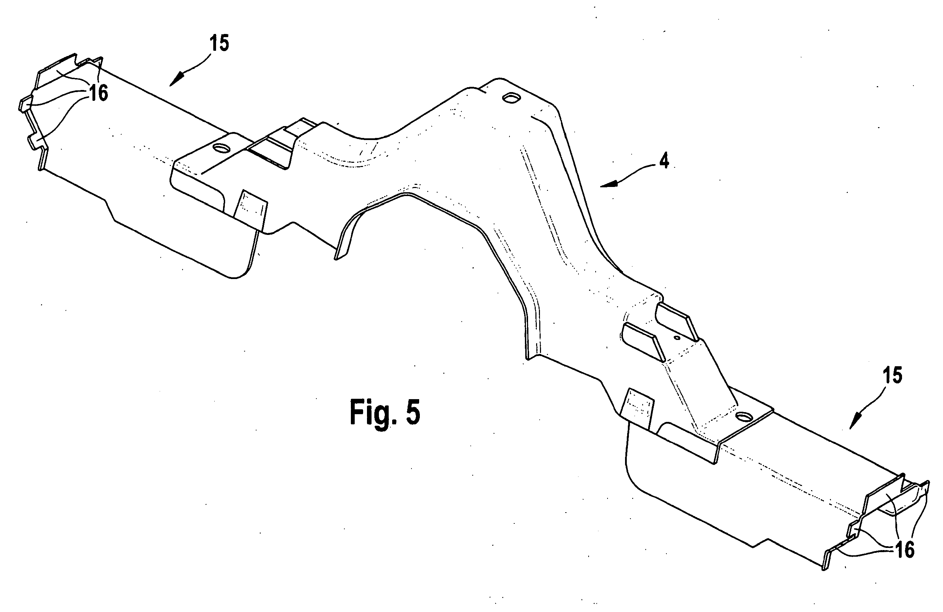

- Figur 5: eine perspektivische Ansicht einer Querträgerstruktur bestehend aus einem mittleren Sitzquerträger und zwei seitlichen Sitzquerträgern gemäß einem bevorzugten Ausführungsbeispiel der vorliegenden Erfindung;
- Figur 6: eine Unteransicht der Querträgerstruktur aus Figur 5;
- Figur 7: eine perspektivische Ansicht eines Querverstärkungselementes mitsamt Koppelelement gemäß einem bevorzugten Ausführungsbeispiel der vorliegenden Erfindung; und
- Figur 8: eine perspektivische Ansicht einer in einem Fahrzeug integrierten Querträgerstruktur gemäß einem bevorzugten Ausführungsbeispiel der vorliegenden Erfindung.

### BESCHREIBUNG BEVORZUGTER AUSFÜHRUNGSBEISPIELE

In den Figuren der Zeichnung bezeichnen dieselben Bezugszeichen gleiche oder funktionsgleiche Komponenten, soweit nichts Gegenteiliges angegeben ist.

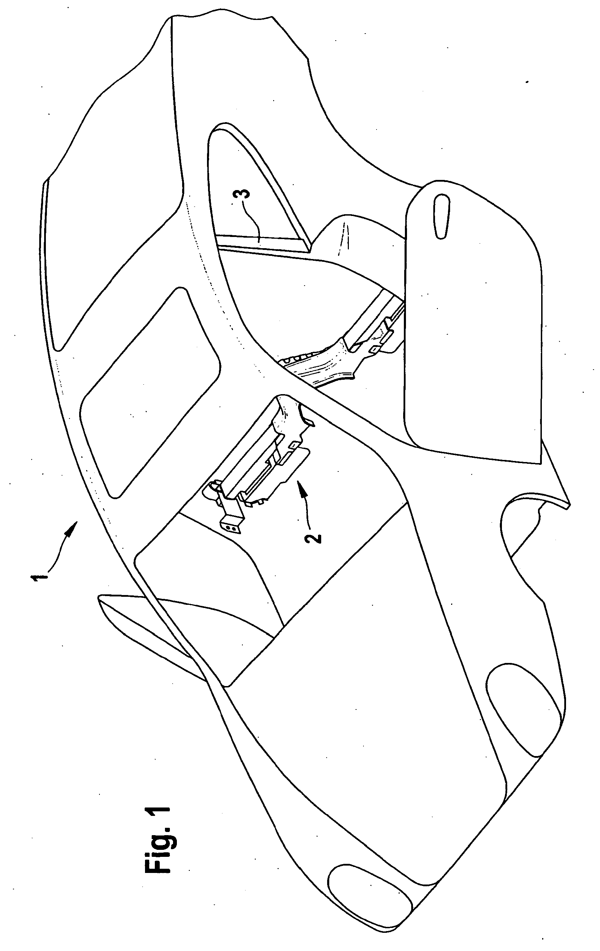

Figur 1 illustriert eine perspektivische Ansicht einer Fahrzeugkarosserie 1, welche eine Querträgerstruktur 2 gemäß einem bevorzugten Ausführungsbeispiel der vorliegenden Erfindung umfasst. Die Querträgerstruktur 2 ist in etwa auf Höhe der B-Säule 3 in Fahrzeugquerrichtung vorgesehen und dient einer Aufnahme einer zugeordneten, nicht dargestellten Sitzmulde der hinteren Sitzreihe des Fahrzeugs.

Die Querträgerstruktur 2 besteht vorzugsweise aus drei einzelnen Querträgerteilen - einem mittleren Sitzquerträger und zwei seitlich dazu angeordneten seitlichen Sitzquerträgern, welche im Folgenden näher beschrieben werden.

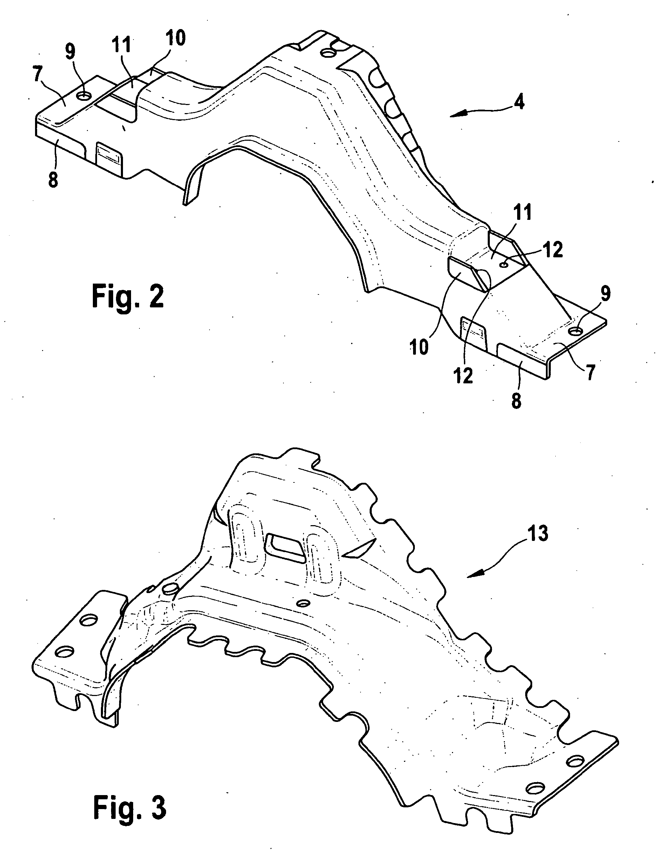

Figur 2 illustriert eine perspektivische Ansicht eines mittleren Sitzquerträgers 4 gemäß einem bevorzugten Ausführungsbeispiel der vorliegenden Erfindung. Gemäß diesem Ausführungsbeispiel ist der mittlere Sitzquerträger 4 als hutförmiger Querträger mit einer bezüglich der Längsachse des Fahrzeugs symmetrischen Ausgestaltung ausgebildet. Der mittlere Sitzquerträger 4 weist vorzugsweise ein U-förmiges Querschnittsprofil auf, welches in etwa in Richtung des Fahrzeugbodens offen ist. Beispielsweise ist der mittlere Sitzquerträger 4 als Gussteil aus einer geeigneten Aluminiumlegierung oder dergleichen hergestellt, so dass ein Querträgerteil mit einer hohen Querversteifung und einem geringen Gewicht gewährleistet wird.

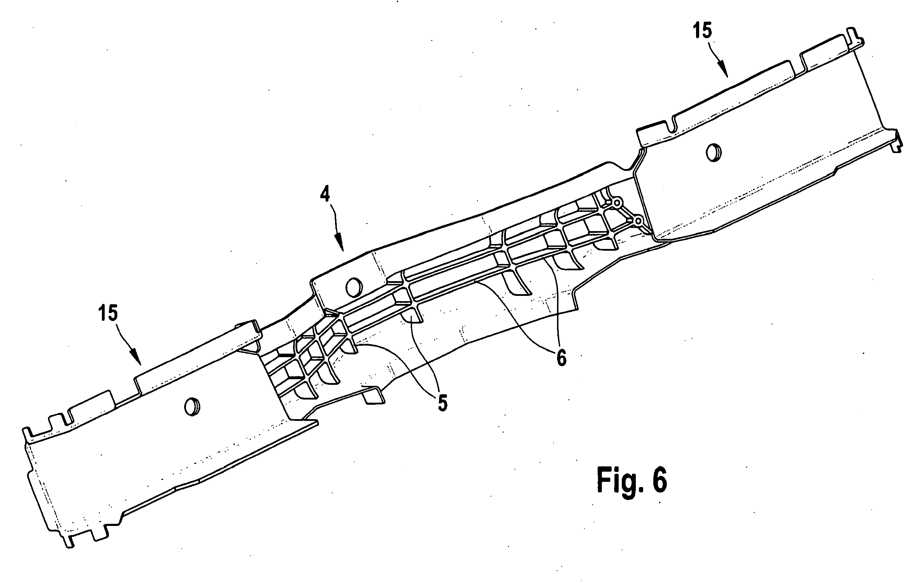

Des Weiteren ist der mittlere Sitzquerträger 4 vorzugsweise an der zum Fahrzeugboden weisenden Fläche bzw. der Profilinnenseite mit Verstärkungsrippen 5, 6 ausgebildet. Wie in der Unteransicht aus Figur 6 ersichtlich ist, können diese Verstärkungsrippen 5, 6 beispielsweise als bezüglich der Längsrichtung des mittleren Sitzquerträgers 4 quer verlaufende Verstärkungsrippen 5 und/oder längs verlaufende Verstärkungsrippen 6 ausgebildet sein. Es ist allerdings für einen Fachmann offensichtlich, dass alternative oder zusätzliche Verstärkungsrippen auch in anderen Ausrichtungen oder Anordnungen vorgesehen werden können. Die Verstärkungsrippen 5, 6 dienen einer zusätzlichen Steifigkeit des mittleren Sitzquerträgers 4 und einer zusätzlichen Aufnahme von Deformationsenergie im Falle eines Seitenunfalls.

Wie in Figur 2 ferner ersichtlich ist, weist der mittlere Sitzquerträger 4 an beiden Seiten jeweils einen seitlichen Befestigungsabschnitt 7 auf, welcher jeweils einer Befestigung eines weiter unten beschriebenen, seitlichen Sitzquerträgers dient. Beispielsweise ist jeder seitliche Befestigungsabschnitt 7 mit einer Anlagekante 8 mit vertikaler Ausrichtung und einem Befestigungsloch 9 für eine Aufnahme eines geeigneten Befestigungsmittels für eine Anbindung des zugeordneten seitlichen Sitzquerträgers ausgebildet.

Zusätzlich weist der mittlere Sitzquerträger 4 gemäß dem vorliegenden Ausführungsbeispiel an beiden Seiten jeweils einen Aufnahmeabschnitt 10 auf, die einer Aufnahme von weiter unten beschriebenen zusätzlichen Querverstärkungselementen dienen. Beispielsweise umfasst jeder Aufnahmeabschnitt 10 einen Aufnahmebereich 11 sowie Befestigungslöcher 12 für eine Befestigung der jeweils zugeordneten Querverstärkungselemente.

Der mittlere Sitzquerträger 4 umfasst ferner Befestigungsabschnitte für eine Anbringung einer zugeordneten, nicht dargestellten Sitzmulde der hinteren Sitzreihe des Fahrzeugs.

Wie oben bereits erläutert wurde, ist der mittlere Sitzquerträger 4 zum Gewährleisten einer ausreichenden Stabilität vorzugsweise als Gussteil mit einem nach unten offenen U-förmigen Querschnittsprofil ausgebildet, innerhalb welchem die längs und/oder quer verlaufenden Verstärkungsrippen 5, 6 vorgesehen sind. Für eine weitere Erhöhung der Steifigkeit der beispielhaften Querträgerstruktur ist ein Schließteil 13 für einen Verschluss der nach unten offenen Seite des U-förmigen Querschnittsprofils des mittleren Sitzquerträgers 4 vorgesehen. Das Schließteil 13 ist vorzugsweise als Blechteil aus einer geeigneten Aluminiumlegierung oder dergleichen hergestellt. Die Form des Schließteils 13 ist vorzugsweise derart komplementär zu der Form des mittleren Sitzquerträgers 4, d.h. ebenfalls hutförmig, ausgestaltet, dass bei geeigneter Befestigung des Schließteils 13 an der Unterseite des mittleren Sitzquerträgers 4 ein kastenförmiges Querträgerprofil mit einer hohen Querversteifung entsteht. Das Schließteil 13 wird vorzugsweise über geeignete Befestigungsmittel, beispielsweise Stanznieten und/oder Klebstoff, mit dem mittleren Sitzquerträger 4 verbunden.

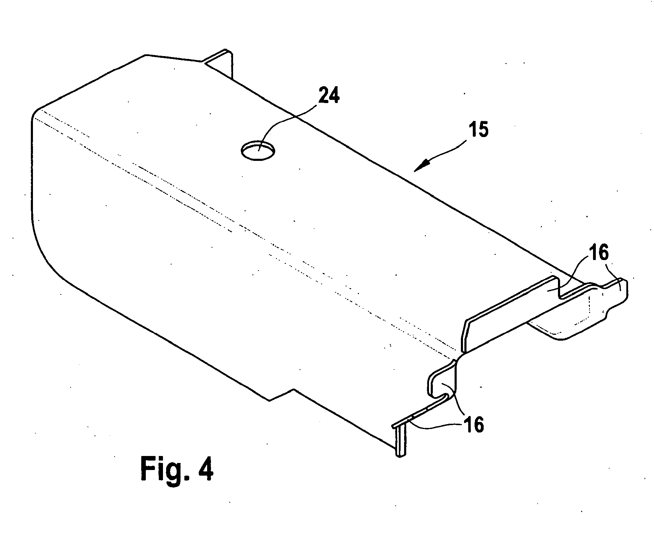

Die erfindungsgemäße Querträgerstruktur weist zudem zwei quer verlaufende seitliche Sitzquerträger 15 auf, von denen jeweils einer auf jeder Seite des mittleren Sitzquerträgers 4 in symmetrischer Anordnung zur Fahrzeuglängsachse vorgesehen ist und die in etwa parallel zum Fahrzeugboden ausgerichtet sind. Figur 4 illustriert beispielhaft einen der beiden seitlichen Sitzquerträger 15 gemäß einem bevorzugten Ausführungsbeispiel der vorliegenden Erfindung.

Die beiden seitlichen Sitzquerträger 15 sind vorzugsweise als Blechformteile aus einer geeigneten Aluminiumlegierung oder dergleichen mit einem in etwa U-förmigen Querschnittsprofil ausgebildet. Die seitlichen Sitzquerträger 15 weisen eine an die seitlichen Befestigungsabschnitte 7 des mittleren Sitzquerträgers 4 angepasste geometrische Abmessung derart auf, dass eine bündige Anlage eines Abschnitts der seitlichen Sitzquerträger 15 an den entsprechend zugeordneten Befestigungsabschnitten 7 des mittleren Sitzquerträgers 4 gewährleistet ist. Dadurch kann auf einfache und kostengünstige Weise eine passgenaue Anbringung der seitlichen Sitzquerträger 15 an dem mittleren Sitzquerträger 4 bewerkstelligt werden, wobei eine Befestigung mittels beispielsweise Kleben und/oder Stanznieten erfolgt. Jedoch sind unter Umständen auch weitere Verbindungsarten möglich, wie insbesondere eine Schraubverbindung oder dergleichen.

Jeder seitliche Sitzquerträger 15 umfasst vorzugsweise an der der Fahrzeugaußenseite zugewandten Stirnseite abgewinkelte Anlageflächen 16, welche sich in direkter oder indirekter Anlage, beispielsweise über einen zugeordneten Flanschabschnitt eines weiteren Trägers oder Strukturteils, mit einem zugeordneten Seitenschwellerabschnitt des Fahrzeugs für eine Abstützung an demselben befinden. Beispielsweise befinden sich die schwellerseitigen Enden der seitlichen Sitzquerträger 15 in Anlage mit einem Flanschabschnitt eines zugeordneten Längsträgers, welcher wiederum direkt an dem zugeordneten Seitenschweller oder einer Schwellerverstärkung anliegt. Allerdings ist auch eine direkte Anlage der seitlichen Sitzquerträger 15 an den zugeordneten Seitenschwellerabschnitten bzw. den Schwellerverstärkungen vorstellbar.

Somit wird bei einer Verbindung des mittleren Sitzquerträgers 4 mit den beiden seitlichen Sitzquerträgern 15 eine Querträgerstruktur geschaffen, welche sich über die abgewinkelten Anlageflächen 16 der seitlichen Sitzquerträger 15 auf beiden Seiten des Fahrzeugs mit den jeweils zugeordneten Seitenschwellerabschnitten unmittelbar oder mittelbar in Wirkverbindung befindet. Dadurch wird eine von einem Seitenschweller des Fahrzeugs zum gegenüberliegenden Seitenschweller durchgehende Querträgerstruktur gewährleistet, die vorteilhaft einen durchgehenden Lastpfad zwischen den beiden Seitenschwellern für eine Aufnahme von Deformationsenergie im Falle eines Seitenunfalls bildet.

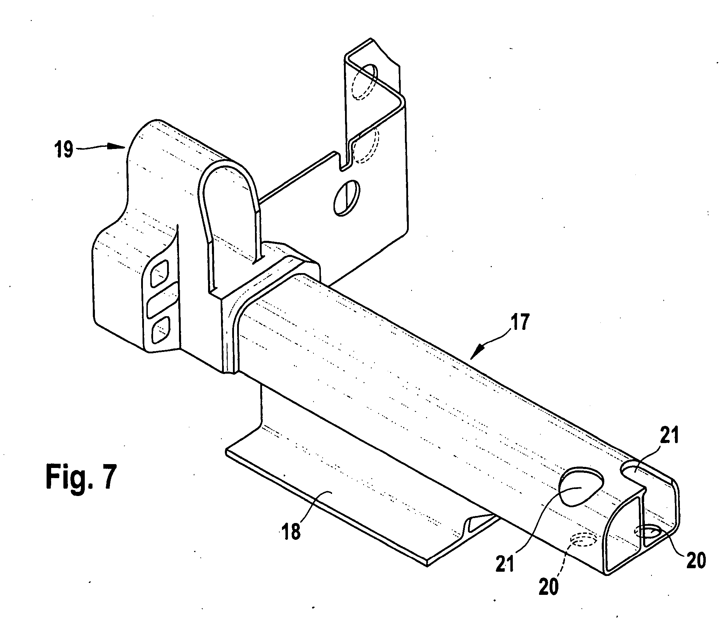

Gemäß einem bevorzugten Ausführungsbeispiel der vorliegenden Erfindung weist die Querträgerstruktur zusätzlich zwei quer verlaufende seitliche Querverstärkungselemente 17 auf, welche auch als sogenannte Sincap-Rohre bezeichnet werden und in etwa parallel zum Fahrzeugboden ausgerichtet sind, wobei in Fig. 7 ein Querverstärkungselemente 17 exemplarisch in Perspektivansicht dargestellt ist.

Die Querverstärkungselemente 17 sind über die zugeordneten Aufnahmeabschnitte 10 des mittleren Sitzquerträgers 4 mit demselben koppelbar und erstrecken sich jeweils in Fahrzeugquerrichtung von den beiden Seitenbereichen des mittleren Sitzquerträgers 4 in Richtung des jeweils zugeordneten inneren Seitenteils der Fahrzeugkarosserie und in etwa parallel zu und oberhalb der jeweils zugeordneten seitlichen Sitzquerträger 15. Die Querverstärkungselemente 17 sind beispielsweise jeweils als eine oder mehrere Hohlkammern; vorzugsweise zwei Hohlkammern aufweisendes Strangpressprofil aus einer geeigneten Aluminiumlegierung oder dergleichen geformt. Die Querverstärkungselemente 17 weisen ferner jeweils einen oder mehrere Abstützfüße 18 für eine Abstützung auf der Oberseite des jeweils zugeordneten seitlichen Sitzquerträgers 15 auf.

Des Weiteren ist jedes Querverstärkungselement 17 mit einem entsprechend zugeordneten Koppelelement 19 verbindbar, welche direkte Kraftübertragungen zwischen den Querverstärkungselementen 17 und den jeweils zugeordneten inneren Seitenteilen der Fahrzeugkarosserie gewährleisten.

Die Querverstärkungselemente 17 umfassen ferner Befestigungslöcher 20, welche bei einer Aufnahme der Querverstärkungselemente 17 in den zugeordneten Aufnahmeabschnitten 10 des mittleren Sitzquerträgers 4 mit den Befestigungslöchern 12 der jeweiligen Aufnahmeabschnitte 10 fluchten. Oberhalb jedes Befestigungslochs 20 ist beispielsweise eine Werkzeugausnehmung 21 vorgesehen, um beispielsweise Befestigungsschrauben in die Befestigungslöcher 12 und 20 für eine Verschraubung der Querverstärkungselemente 17 an dem mittleren Sitzquerträger 4 einzusetzen.

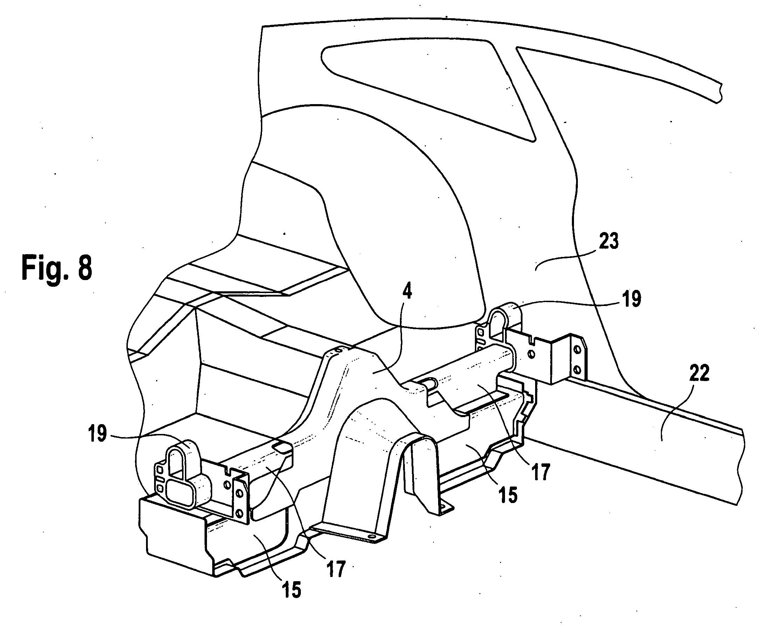

Somit bilden die sich an einem zugeordneten Seitenteil der Fahrzeugkarosserie abstützenden Querverstärkungselemente 17 einen zusätzlichen, unabhängigen Lastpfad von einem Seitenteil 23 der Fahrzeugkarosserie zu dem gegenüber liegenden Seitenteil der Karosserie, wie in Figur 8 schematisch in einer Teilansicht illustriert ist.

Es werden ein erster Lastpfad von einem Seitenschwellerabschnitt 22 des Fahrzeugs über den ersten seitlichen Sitzquerträger 15, den mittleren Sitzquerträger 4, dem gegenüber liegenden seitlichen Sitzquerträger 15 und dem gegenüber liegenden Seitenschwellerabschnitt (nicht dargestellt) sowie ein zweiter davon unabhängiger Lastpfad von einem Seitenteil 23 der Fahrzeugkarosserie über das Koppelelement 19, das erste Querverstärkungselement 17, den mittleren Sitzquerträger 4, das gegenüber liegende Querverstärkungselement 17, das gegenüber liegende Koppelelement 19 und das gegenüber liegende Seitenteil des Fahrzeugs (nicht dargestellt) gebildet. Diese beiden unabhängigen Lastpfade dienen einer verbesserten Steifigkeit der Querträgerstruktur und einer verbesserten Aufnahme von Deformationsenergie im Falle eines Seitenunfalls. Dadurch kann die Sicherheit der Fahrzeuginsassen im Falle eines Unfalls erheblich verbessert werden.

Obwohl die vorliegende Erfindung vorstehend anhand bevorzugter Ausführungsbeispiele beschrieben wurde, ist sie darauf nicht beschränkt, sondern auf vielfältige Weise modifizierbar.

## Patentansprüche

1. Fahrzeugkarosserie (1) mit seitlichen Schwellerabschnitten (22), Karosserieseitenteilen (23) und einer Querträgerstruktur (2) für einen Sitzbereich eines Fahrzeugs, mit einem mittleren Sitzquerträger (4), der seitliche Befestigungsabschnitte (7) aufweist, der als hutförmiger Querträger mit einem U-förmigen, in etwa in Richtung der Fahrzeugunterseite offenen Querschnittsprofil ausgebildet ist und dessen Öffnungsbereich des U-förmigen Querschnittsprofils des mittleren Sitzquerträgers (4) mit einem Schließteil (13) zum Bilden eines geschlossenen Kastenprofils gekoppelt ist; und mit zwei seitlichen Sitzquerträgern (15), die jeweils mit einem zugeordneten seitlichen Befestigungsabschnitt (7) des mittleren Sitzquerträgers (4) verbunden sind und sich jeweils in Fahrzeugquerrichtung von dem zugeordneten seitlichen Befestigungsabschnitt (7) des mittleren Sitzquerträgers (4) bis in Wirkverbindung mit einem jeweils zugeordneten Seitenschwellerabschnitt (22) des Fahrzeugs erstrecken und welche seitlichen Sitzquerträger (15) jeweils mit einem U-förmigen Querschnittsprofil ausgebildet sind, **dadurch gekennzeichnet, dass** der mittlere Sitzquerträger (4) in seinen beiden Seitenbereichen jeweils einen Aufnahmeabschnitt (10) für eine Aufnahme eines jeweils darin eingesetzten Querverstärkungselementes (17) aufweist und dass die Querverstärkungselemente (17) jeweils mit Koppelelementen (19) für eine Anbindung der Querverstärkungselemente (17) an einen jeweils zugeordneten Abschnitt der Karosserieseitenteile (23) des Fahrzeugs gekoppelt sind.

2. Fahrzeugkarosserie nach Anspruch 1, **dadurch gekennzeichnet, dass** der mittlere Sitzquerträger (4) und die beiden seitlichen Sitzquerträger (15) in symmetrischer Anordnung zur Fahrzeuglängsachse eingesetzt sind.

3. Fahrzeugkarosserie nach Anspruch 1 oder 2, **dadurch gekennzeichnet, dass** der mittlere Sitzquerträger (4) an der Profilinnenseite mehrere Verstärkungsrippen (5; 6) aufweist, welche vorzugsweise in Längs- und/oder in Querrichtung des mittleren Sitzquerträgers (4) verlaufen.

4. Fahrzeugkarosserie nach wenigstens einem der vorhergehenden Ansprüche, **dadurch gekennzeichnet, dass** der mittlere Sitzquerträger (4) als Gussteil, beispielsweise aus einer Leichtmetalllegierung wie insbesondere einer Aluminiumlegierung, ausgebildet ist.

5. Fahrzeugkarosserie nach Anspruch 1, **dadurch gekennzeichnet, dass** das Schließteil (13) als Blechteil, beispielsweise aus einer Leichtmetalllegierung wie insbesondere einer Aluminiumlegierung, ausgebildet ist.

6. Fahrzeugkarosserie nach Anspruch 1 oder 2, **dadurch gekennzeichnet, dass** die seitlichen Sitzquerträger (15) jeweils als Blechformteile, beispielsweise aus einer Leichtmetalllegierung wie insbesondere einer Aluminiumlegierung, ausgebildet sind.

7. Fahrzeugkarosserie nach wenigstens einem der vorhergehenden Ansprüche, **dadurch gekennzeichnet, dass** der mittlere Sitzquerträger (4) mit den beiden seitlichen Sitzquerträgern (15) über die seitlichen Befestigungsabschnitte (7) mittels einer Klebeverbindung und/oder einer Stanznietverbindung oder dergleichen verbunden ist.

8. Fahrzeugkarosserie nach Anspruch 1, **dadurch gekennzeichnet, dass** die Querverstärkungselemente (17) jeweils als rohrförmiges Strangpressprofil, beispielsweise aus einer Leichtmetalllegierung wie insbesondere einer Aluminiumlegierung, ausgebildet sind.

9. Fahrzeugkarosserie nach Anspruch 1 oder 8, **dadurch gekennzeichnet, dass** die Querverstärkungselemente (17) jeweils Abstützfüße (18) für eine Abstützung auf dem jeweils zugeordneten seitlichen Sitzquerträger (15) aufweisen.

## Claims

1. Vehicle body (1) having lateral sill sections (22), body side parts (23) and a cross member structure (2) for a seat area in a vehicle, having a central seat cross member (4) which has lateral fastening sections (7), which is formed as a hat-shaped cross member with a U-shaped cross-sectional profile open approximately in the direction of the vehicle underside, and whose opening area of the U-shaped cross-sectional profile of the central seat cross member (4) is coupled to a closing part (13) to form a closed box profile; and having two lateral seat cross members (15) which are connected in each case to an associated lateral fastening section (7) of the central seat cross member (4) and which extend in each case in the vehicle transverse direction from the associated lateral fastening section (7) of the central seat cross member (4) to an operative connection to a respectively associated side sill section (22) of the vehicle, which lateral seat cross members (15) are formed in each case with a U-shaped cross-sectional profile, **characterized in that** the central seat cross member (4) has, in its two side areas, in each case one holding section (10) for holding a transverse reinforcement element (17) which is inserted therein in each case, and **in that** the transverse reinforcement elements (17) are each coupled to coupling elements (19) for connecting the transverse reinforcement elements (17) to a respectively associated section of the body side parts (23) of the vehicle.

2. Vehicle body according to Claim 1, **characterized in that** the central seat cross member (4) and the two lateral seat cross members (15) are inserted in a symmetrical arrangement with respect to the vehicle longitudinal axis.

3. Vehicle body according to Claim 1 or 2, **characterized in that** the central seat cross member (4) has, on the profile inner side, a plurality of reinforcement ribs (5; 6) which run preferably in the longitudinal and/or transverse direction of the central seat cross member (4).

4. Vehicle body according to at least one of the preceding claims, **characterized in that** the central seat cross member (4) is formed as a cast part, for example from a light metal alloy such as in particular an aluminium alloy.

5. Vehicle body according to Claim 1, **characterized in that** the closing part (13) is formed as a sheet-metal part, for example from a light metal alloy such as in particular an aluminium alloy.

6. Vehicle body according to Claim 1 or 2, **characterized in that** the lateral seat cross members (15) are each formed as sheet-metal moulded parts, for example from a light metal alloy such as in particular an aluminium alloy.

7. Vehicle body according to at least one of the preceding claims, **characterized in that** the central seat cross member (4) is connected to the two lateral seat cross members (15) via the lateral fastening sections (7) by means of an adhesive connection and/or a punch rivet connection or the like.

8. Vehicle body according to Claim 1, **characterized in that** the transverse reinforcement elements (17) are each formed as tubular extruded profiles, for example from a light metal alloy such as in particular an aluminium alloy.

9. Vehicle body according to Claim 1 or 8, **characterized in that** the transverse reinforcement elements (17) each have support feet (18) for support on the respectively associated lateral seat cross member (15).

## Revendications

1. Carrosserie de véhicule (1) comprenant des portions de bas de marche (22), des parties latérales de carrosserie (23) et une structure de traverse (2) pour une région d'assise d'un véhicule, comprenant un support transversal central de siège (4), qui présente des portions de fixation latérales (7) qui est réalisé sous forme de support transversal en forme de chapeau avec un profilé de section transversale en forme de U ouvert approximativement dans la direction du côté inférieur du véhicule, et dont la région d'ouverture du profilé de section transversale en forme de U du support transversal central de siège (4) est accouplée à une pièce de fermeture (13) pour former un profilé en forme de caisse fermée ; et comprenant deux supports transversaux latéraux de siège (15), qui sont connectés à chaque fois à une portion de fixation latérale associée (7) du support transversal central de siège (4), et qui s'étendent à chaque fois dans la direction transversale du véhicule depuis la portion de fixation latérale associée (7) du support transversal central de siège (4) jusqu'à venir en liaison fonctionnelle avec une portion de bas de marche latérale associée respective (22) du véhicule, lesdits supports transversaux de siège (15) étant réalisés à chaque fois avec un profilé de section transversale en forme de U, **caractérisé en ce que** le support transversal central de siège (4) présente, dans ses deux régions latérales à chaque fois une portion de réception (10) pour recevoir un élément de renfort transversal respectif (17) inséré dans celle-ci, et **en ce que** les éléments de renfort transversaux (17) sont à chaque fois accouplés à des éléments d'accouplement (19) pour une connexion des éléments de renfort transversaux (17) à une portion associée respective de la carrosserie (23) du véhicule.

2. Carrosserie de véhicule selon la revendication 1, **caractérisée en ce que** le support transversal central de siège (4) et les deux supports transversaux latéraux de siège (15) sont insérés suivant un agencement symétrique par rapport à l'axe longitudinal du véhicule.

3. Carrosserie de véhicule selon la revendication 1 ou 2, **caractérisée en ce que** le support transversal de siège central (4) présente sur le côté intérieur du profilé plusieurs nervures de renforcement (5 ; 6) qui s'étendent de préférence dans la direction longitudinale et/ou transversale du support transversal central de siège (4).

4. Carrosserie de véhicule selon au moins l'une quelconque des revendications précédentes, **caractérisée en ce que** le support transversal central de siège (4) est réalisé sous forme de pièce coulée, par exemple en un alliage de métal léger comme en particulier un alliage d'aluminium.

5. Carrosserie de véhicule selon la revendication 1, **caractérisée en ce que** la pièce de fermeture (13) est réalisée sous forme de pièce en tôle, par exemple en un alliage de métal léger comme en particulier un alliage d'aluminium.

6. Carrosserie de véhicule selon la revendication 1 ou 2, **caractérisée en ce que** les supports transversaux latéraux de siège (15) sont réalisés à chaque fois sous forme de pièces façonnées en tôle, par exemple en un alliage de métal léger comme en particulier un alliage d'aluminium.

7. Carrosserie de véhicule selon au moins l'une quelconque des revendications précédentes, **caractérisée en ce que** le support transversal central de siège (4) est connecté aux deux supports transversaux latéraux de siège (15) par le biais des portions de fixation latérales (7) au moyen d'une connexion par collage et/ou d'une connexion par rivetage poinçonnant ou similaire.

8. Carrosserie de véhicule selon la revendication 1, **caractérisée en ce que** les éléments de renfort transversaux (17) sont réalisés à chaque fois sous forme de profilé filé, par exemple en un alliage de métal léger comme en particulier un alliage d'aluminium.

9. Carrosserie de véhicule selon la revendication 1 ou 8, **caractérisée en ce que** les éléments de renfort transversaux (17) présentent à chaque fois des pieds de support (18) pour un support sur le support transversal latéral de siège (15) respectivement associé.
